Europäisches Patentamt

European Patent Office

Office européen des brevets

(19)

(11) Publication number: **0 262 541 B1**

(12) **EUROPEAN PATENT SPECIFICATION**

(45) Date of publication of patent specification: **22.05.91**

(21) Application number: **87113756.8**

(22) Date of filing: **21.09.87**

(51) Int. Cl.5: **C23F 11/12, C23F 11/16,**
C23F 11/173, C23F 11/18,
C23F 11/04

(54) **Protective compositions with iron oxide conversion action.**

(30) Priority: **01.10.86 IT 2186586**

(43) Date of publication of application:
**06.04.88 Bulletin 88/14**

(45) Publication of the grant of the patent:
**22.05.91 Bulletin 91/21**

(84) Designated Contracting States:
**AT BE CH DE ES FR GB GR IT LI LU NL SE**

(56) References cited:
**EP-A- 0 177 406          CH-A- 650 029**
**DD-A- 211 242          DD-A- 218 635**
**GB-A- 2 138 414          GB-A- 2 138 796**
**GB-A- 2 169 890          US-A- 4 435 361**

**PATENT ABSTRACTS OF JAPAN, unexamin-
ed applications, C field, vol. 7, no. 242, Octo-
ber 27, 1983, THE PATENT OFFICE JAPANESE
GOVERNMENT, page 166 C 192**

(73) Proprietor: **Muzzi, Maria Grazia**
**Via Kennedy, 3**
**S. Donato Milanese (Milano)(IT)**

Proprietor: **Ciuti, Elisabetta**
**via Hermada 8**
**Milano(IT)**

Proprietor: **Ciuti, Francesca**
**via Kennedy 3**
**San Donato Milanese (MI)(IT)**

(72) Inventor: **Muzzi, Maria Grazia**
**Via Kennedy, 3**
**S. Donato Milanese (Milano)(IT)**
Inventor: **Ciuti, Elisabetta**
**via Hermada 8**
**Milano(IT)**
Inventor: **Ciuti, Francesca**
**via Kennedy 3**
**San Donato Milanese (MI)(IT)**

(74) Representative: **Gervasi, Gemma, Dr.**
**NOTARBARTOLO & GERVASI Srl 33, Viale
Bianca Maria**
**I-20122 Milano(IT)**

EP 0 262 541 B1

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

The protection of ferrous material in certain fields such as industry, building, and in particular watercraft and harbour equipment raises the specific problem of the availability, for periodical maintenance of metal surfaces which have been installed for some time, of products which are of relatively low cost and easy application, while at the same time ensuring relatively durable protection.

Commercially available known protective compositions suitable for periodic maintenance tend to be used for this purpose. Protective compositions of this type can be defined as "temporary long-term protective compositions", to distinguish them from traditional primer used in paints which can in contrast be defined as "permanent protective compositions".

An example of such compositions is described in CH 650029. However, even with the use of low-cost protective compositions, the cost of their application remains very high because before distributing them over the surfaces concerned, these surfaces must be cleaned to remove mainly iron oxides, whatever type of protective composition is chosen, this being done by the use of mechanical systems such as scraping, brushing and in particular sand blasting, these being costly operations.

This preparation of the surfaces to be protected is not only very costly but also becomes more difficult, and often impossible to implement with conventional known mechanical systems, when the surfaces are difficult to reach such as in the case of box structures, pipes, compartments or lattice structures, where direct worker access can also be problematic for safety reasons. Even so, such cases, which are very frequent, must still undergo a certain periodical maintenance in order to prolong the structure life as much as possible.

Known chemical surface improvement systems are also available, based on the use of pickling solutions with phosphating or oxide conversion action, these being available commercially under various names and brands.

Thus in the current state of the art, large iron surfaces such as the interiors of dry dock tanks, the walls of ship cargo holds, the internal surfaces of ballast tanks, bridge lattice work and box structures or building components in general are usually protected during maintenance by applying protective films after more or less severe surface cleaning by known mechanical or chemical systems.

The present invention provides a protective antirust composition able to form a layer of variable thickness and consistency on the surfaces concerned, while at the same time promoting chemical action under the protective layer which has just been applied, until the iron oxides have been completely converted into stable organic complexes properly anchored to the underlying metal, so that the external protective layer has the best possible support for ensuring durable protection and antirust effect.

The practical application of the present invention therefore contribute considerably to largely solving the aforesaid problems. In this respect, using the protective compositions according to the present invention, ferrous surfaces already covered with oxides can be treated in a single operation after merely removing the macroscopic oxide scale, preferably with high-pressure water jets, and then applying the protective composition directly to the wet surface.

After application, a series of complex reactions takes place on the metal surface below the protective layer, which gradually increases in consistency and becomes securely bonded to the metal surface itself, to incorporate the products deriving from the conversion reaction. The process is complete in 24-48 hours.

Thus oxidised surfaces can be restored and given temporary long-term protection by means of a single operation with relatively low labour costs.

Moreover, when the need subsequent ly arises, any necessary retouching can be affected with no or almost no preparation of the surfaces concerned.

It should be clearly noted at this point that on the practical level, the products of the present invention are very different in terms of compositions, as will be seen hereinafter, and in terms of behaviour from those types of commercial rust converters which tend to leave a solid film on the surface after converting the underlying oxides like that described in the already cited CH 650029. The fields of application and the areas of commercial interest are also completely different.

It should also be noted that the action mechanism of the compositions according to the present invention, although appearing very simple, has been conceived after lengthy investigation in order to identify the most suitable components and their correct proportions, and to obtain homogeneous mixtures which although consisting of two phases, namely a hydrophobic phase and a hydrophilic phase of high electrolyte content and very low pH, are stable during prolonged storage while at the same time being able to form a continuous layer immediately after application. In this respect it is extremely important that after the formation of the covering layer, the time required for the drying and hardening of the protective film is such as to allow completion of the underlying conversion process, and that at the same time the consistency of the protective layer is the most suitable for the various applicational requirements while being of adequate adherence to the metal surface.

The composition according to the present invention consists of a homogeneous fluid mixture formed from the following essential ingredients, which are present in the form of a storage-stable emulsion or dispersion:

a) Substances with hydrophobic characteristics able to form a layer of pasty consistency on the ferrous surface to be protected, they being chosen from natural or synthetic fats of pasty consistency, natural or synthetic waxes, and low molecular weight hydrocarbon polymers (oligomers). Substances of this type suitable as components of the composition according to the invention are: glycerides of animal or vegetable origin, hydrocarbon fats, petrolatum, partially oxidised petrolatum, lanolin, and low molecular weight polymers of ethylene, propylene, butadiene and their mixtures.

b) An aqueous solution, or a solution in a mixture of water and water-soluble solvents, of one or more compounds of gallic, tannic, pyrogallic or ellagic acid type, possible in the form of mixtures of natural products (tannin), able to convert ferrous oxides into stable organic complexes with high adherence to the metal surface, and preferably also containing a composition able to give the metal surface increased corrosion resistance, this preferably consisting of phosphoric acid and/or metal phosphates, in particular of Zn.

c) Substances functioning as emulsifiers and thickeners in order to maintain all the composition ingredients in homogeneous mixture, they comprising:

- ionic or non-ionic surface active agents, in particular of the ammonium or alkaline sulphonate class
- thickening and densifying agents such as pectins, methyl cellulose, ethyl cellulose or bentonite.

Particularly suitable for certain specific applications are those compositions, again forming part of the present invention, in which the substances of group c) consist of glycols and polyglycols of determined molecular weight, and monoglycerides and diglycerides of particular fatty acids. Depending on their molecular weight and their chemical structure, these substances can be water-soluble, liposoluble or partly soluble either in mainly aqueous systems or non-aqueous systems. Thus by suitable proportioning, and if required for the type of application, water-soluble protective layers can be obtained containing anticorrosive antirust substances which are also water-soluble and which can therefore perform a particular role in the case of d etermined protection requirements (such as the preparation of surfaces for subsequent application of water-based paints).

d) Organic solvents as fluidifying diluents for the composition. Suitable solvents are alcohols, mineral and vegetable turpentine, and chlorinated hydrocarbons.

The composition according to the invention preferably also contains anticorrosive agents of the alkaline metal, alkaline earth metal or zinc soap or sulphonate type.

The degree of composition acidity required for the protective phosphating action and for conversion of the iron oxide present in the surface and suitable adjustment of the oxidation-reduction potential of the mixture is obtained by inorganic acids, including perchloric acid and the already mentioned phosphoric acid, and organic acids, of which those most used in practice are acetic acid and lactic acid.

The quantity of substance of group a) in the composition according to the invention is such as to form an adequate protective layer after application and complete evaporation of the volatile components. Generally, this quantity is between 10% and 50% by weight and preferably between 20% and 30% by weight.

The preferred quantity of tannin substances is 5-15% by weight.

The quantity of other ingredients (diluents, thickeners, free acids) depends on the characteristics of the basic ingredients of the composition and the required mixture fluidity and acidity.

From the aforegoing it will be clear that certain particular compositions forming part of the present invention are not to be confused with the common known rust converters. In this respect, although performing analogous functions, the compositions of the present Invention are able to form protective layers having different degrees of solubility and different degrees of anticorrosive antirust power, and thus also able in certain cases to constitute the basis for furthest protective treatment.

In other words, the surface layer which remains after treatment must be viewed as a pasty support which incorporates anticorrosive antirust additives of various types, these being the true active components.

The following examples are given by way of non-limiting illustration of the invention.

EP 0 262 541 B1

EXAMPLE 1

Composition consisting of the following ingredients:

| Oxidised petrolatum (Saponification number 8 mg KOH/g) | 25% by weight |
| --- | --- |
| 10% aqueous ammonium hydroxide | 5% by weight |
| 60% phosphoric acid | 5% by weight |
| 70% perchloric acid | 5% by weight |
| Tannin | 6% by weight |
| Water | 20% by weight |
| 1,1,1-trichloroethane | 30% by weight |
| Zinc oxide | 3% by weight |

Preparation: the petrolatum is melted (65°C) and 5% of the water and all of the ammonium hydroxide are added. The mixture is stirred energetically, the temperature is increased to 90°C and the mass maintained at this temperature for one hour. It is then allowed to cool, after which the phosphoric acid and zinc oxide are added. After a further 15 minutes of stirring, the perchloric acid is added. The remainder of the water and the tannin are added after half an hour, and stirring is continued until a homogeneous mixture is obtained and then until ambient temperature is reached. The product is in the form of a dark brown gelatinous fluid and is ready for application.

EXAMPLE 2

| Refined lanolin | 20% by weight |
| --- | --- |
| Potassium hydroxide (20% solution) | 5% by weight |
| Gallotannic acid | 10% by weight |
| Water | 20% by weight |
| Zinc phosphate | 5% by weight |
| Zinc perchlorate | 5% by weight |
| Glacial acetic acid | 2% by weight |
| Commercial polybutadiene (50% in mineral oil) | 1% by weight |
| Mineral turpentine | 34% by weight |

Preparation; the lanolin is melted together with the polybutadiene and the temperature raised to 90°C. The potassium hydroxide solution is added and the mixture stirred energetically for half an hour maintaining the temperature at 90°C. The water is added slowly. The temperature is lowered to 60°C. The gallotannic acid, zinc phosphate, zinc perchlorate and acetic acid are added in that order under rapid stirring. The mass, which is in the form of a homogeneous consistent emulsion, is diluted at this point with the mineral turpentine, and the product is ready for use.

4

**EXAMPLE 3**

| | |
|---|---|
| Neutral calcium sulphonate (synthesis type, average molecular weight 550) | 3% by weight |
| Crude petrolatum (degree of penetration 180-200) | 30% by weight |
| Tannin | 7% by weight |

| | |
|---|---|
| 60% phosphoric acid | 5% by weight |
| Zinc oxide | 3% by weight |
| Glacial acetic acid | 4% by weight |
| 1,1,1-trichloroethane | 30% by weight |
| Water | 15% by weight |
| Bentonite | 3% by weight |

Preparation: the petrolatum is melted and the temperature raised to 80°C. The sulphonate and bentonite are added and the mass cooled to 50°. At this point the trichloroethane is added and the mixture stirred energetically until homogeneous. The water, tannin and zinc oxide are then added slowly in that order under rapid stirring. A very homogeneous emulsiondispersion is obtained. The phosphoric acid is then added slowly followed by the acetic acid. After cooling under slow stirring, a homogeneous gelatinous mass is obtained ready for use.

**Claims**

1. For iron and steel surfaces a protective temporary long term anti-rust composition of fluid consistency comprising the following ingredients as a homogeneous stable mixture:
   a) a substance with hydrophobic properties able form a layer of pasty consistency on the ferrous surface to be protected selected from the class consisting of: natural and synthetic fats, natural and synthetic waxes and oligomers of ethylene, propylene and butadiene and their mixtures;
   b) an aqueous solution, or a solution in a mixture of water and water--soluble solvents, of a component able to convert iron oxides into stable organic complexes and with strong adhesion to the metal surface said component being selected from the class consisting of: gallic acid, tannic acid, pyrogallic acid, ellagic acid or relative natural compound (tannin), said aqueous solution further containing a composition able to give the metal surface increased corrosion resistance, this preferably consisting of phosphoric acid and/or metalphosphates in particular of Zn;
   c) - thickening and densifying agents, in particular alkaline sulphonates;
      - thickening and densifying agents such as pectins, methyl cellulose, bentonite, polyglycols of a determined molecular weights monoglycerides and diglycerides of fatty acids
   d) organic diluent and fluidifying solvents chosen from chlorinated hydrocarbons and alcohols.

2. A composition as claimed in claim 1 wherein the pH of component (b) is adjusted by an excess of phosphoric and/or perchloric acid and organic acids selected from acetic acid and lactic acid.

3. A composition as claimed in claim 1 further containing anticorrosive agents of the alkaline and alkaline earth metal soap or sulphonates class.

4. A composition as claimed in claim 1 containing from 10 to 50% by weight of the ingredient of class a).

5

5.  A composition as claimed in claim 1 containing from 20 to 30% by weight of the ingredient of class a).

6.  A composition as claimed in claim 2 containing from 5 to 15% by weight of substances of the tannin class.


## Revendications

1.  Composition anti-rouille de protection temporaire de longue durée pour des surfaces de fer et d'acier, de consistance fluide, comprenant les ingrédients suivants, sous forme d'un mélange homogène stable.
    a) une substance aux propriétés hydrophobes, susceptible de former une couche de consistance pâteuse sur la surface ferreuse à protéger, choisie dans la classe constituée par : des graisses naturelles et synthétiques, des cires naturelles et synthétiques et des oligomères de l'éthylène, du propylène et du butadiène, ainsi que leurs mélanges ;
    b) une solution aqueuse, ou une solution dans un mélange d'eau et de solvants hydrosolubles, d'un composant susceptible de convertir les oxydes de fer en complexes organiques stables et avec une forte adhérence à la surface du métal, ledit composant étant choisi dans la classe constituée par : l'acide gallique, l'acide tannique, l'acide pyrogallique et l'acide ellagique, ou des composés naturels correspondants (tanin), cette solution aqueuse contenant en outre une composition susceptible de donner à la surface du métal une résistance accrue à la corrosion, celle-ci consistant de préférence en l'acide phosphorique et/ou des phosphates de métaux, en particulier le zinc ;
    c) des agents d'épaississement et de densification, en particulier des sulfonates alcalins;
    -   des agents d'épaississement et de densification, tels que les pectines, la méthylcellulose, la bentonique, des polyglycols d'un poids moléculaire déterminé, des monoglycérides et des diglycérides d'acides gras ;
    d) un diluant organique et des solvants fluidifiants choisis parmi des hydrocarbures chlorés et des alcools.

2.  Composition telle que revendiquée dans la revendication 1, dans laquelle le pH du composant (b) est ajusté par un excès d'acide phosphorique et/ou perchlorique et des acides organiques choisis parmi l'acide acétique et l'acide lactique.

3.  Composition telle que revendiquée dans la revendication 1, contenant en outre des agents anti-corrosion de la classe des savons de métaux alcalins et alcalino-terreux ou des sulfonates.

4.  Composition telle que revendiquée dans la revendication 1, contenant de 10% à 50% en poids de l'ingrédient de la classe (a).

5.  Composition telle que revendiquée dans la revendication 1, contenant de 20% à 30% en poids de l'ingrédient de la classe (a).

6.  Composition telle que revendiquée dans la revendication 2, contenant de 5% à 15% en poids de substances de la classe des tanins.


## Ansprüche

1.  Flüssige Rostschutz-Zusammensetzung für die einstweilige, langzeitige Beschützung von Oberflächen aus Eisen und Stahl, die die folgenden Bestandteile als homogene, stabile Mischung enthält :
    a) eine hydrophobe Substanz die eine teigige Schicht auf die zu beschützende eiserne Oberfläche bilden kann, welche aus der natürliche oder synthetische Fette, natürliche oder synthetische Wächse und Ethylen-, Propylen- und Butadien-oligomere und ihre Mischungen enthaltenden Klasse ausgewählt wird.
    b) eine Lösung in Wasser, oder in einer Mischung von Wasser und wasserlöslichen Lösungsmitteln, eines Bestandteiles welcher die Eisenoxyde in stabile Komplexverbidungen umsetzen kann und eine starke Haftfestigkeit zu der metallischen Oberfläche aufweist, wobei der obengesagte Bestandteil aus : Gallsäure, Gerbsäure, Pyrogallsäure, Ellagsäure oder der natürlichen Substanz (Tannin) ausgewählt wird, wobei die gesagte wässerige Lösung auch eine Zusammensetzung, die die Korrosionsfestigkeit der Oberfläche verstärken kann, enthält, welche Zusammensetzung vorzugsweise aus Phosporsäuren und Metalphosphaten, besonders Zn-phosphaten,
besteht.
c) - Eindickungs-Mittel, besonders Alkali-sulphonate;
   - Eindickungs-Mittel wie Pektin, Methylzellulose, Bentonit, Polyglycole mit einem bestimmten Molekulargewicht, Mono- und Di-glyzeride von Fettsäuren.
d) Organische Lösungsmittel und Fluidisierungsmittel, die aus chlorierten Kohlenwasserstoffen und Alkoholen ausgewählt sind.

2. Zusammensetzung gemäß Anspruch 1, wobei das pH des Bestandteiles (B) mit einem Überschuss von Phosphorsäure und/oder Perchlorsäure und organischen Säuren, ausgewählt zwischen Essigsäure und Milchsäure, eingestellt wird.

3. Zusammensetzung gemäß Anspruch 1, die auch ein Rostschutzmittel der Klasse der Alkalimetall- und Erdalkalimetall-Seifen enthält.

4. Zusammensetzung gemäß Anspruch 1, die von 10 bis 50 Gew.-% des Bestandteiles der Klasse (A) enthält.

5. Zusammensetzung gemäß Anspruch 1, die von 20 bis 30 Gew.-% des Bestandteiles der Klasse (A) enthält.

6. Zusammensetzung gemäß Anspruch 2, die von 5 bis 15 Gew.-% der Substanze der Tannin-Klasse enthält.